# EUROPEAN PATENT SPECIFICATION

(11) **EP 3 995 220 B1**
(45) Date of publication and mention of the grant of the patent: **21.06.2023**
(21) Application number: 21204173.5
(22) Date of filing: 22.10.2021
(51) Int. Cl.: B08B 3/02, B08B 13/00

(54) **PROCESSING SYSTEM**
VERARBEITUNGSSYSTEM
SYSTÈME DE TRAITEMENT

(30) Priority: 10.11.2020 JP 2020187322
(43) Date of publication of application: 11.05.2022
(73) Proprietor: Sugino Machine Limited, Namerikawa City, Toyama 936-8577 (JP)
(72) Inventor: HAREMAKI, Hiroki, Uozu City, Toyama 937-8511 (JP); MATSUI, Taiki, Uozu City, Toyama 937-8511 (JP)
(74) Representative: Global IP Europe Patentanwaltskanzlei

(56) References cited:
- CN-U- 208 482 889
- CN-U- 211 515 329
- JP-B2- 4 203 298

## Description

### BACKGROUND

### 1. Technical Field

The present invention relates to a processing system. 2. Description of the Background

A conventional cleaning device includes a cleaning chamber, a nozzle, a table for placing a workpiece, a table pivot shaft disposed on the table with an inclination angle with respect to a virtual axis orthogonal to the table, and a support tool for pivotally supporting the table pivot shaft (Japanese Patent No. 4203298, hereinafter, Patent Literature 1).
CN 211 515 329 U describes an automatic cleaning and blow-drying device which comprises a main body rack, an automatic door, an overturning assembly, a lifting translation assembly, a cleaning assembly and a water tank, and a feeding and discharging opening is formed in the main body rack; the automatic door is located on the feeding and discharging opening in an up-down moving mode.
CN 208 482 889 U discloses a modularization combination formula cleaning machine comprising the process step of multiple modularization, whereby process step include: main body frame, cell body, scavenging pump and spray the cavity, the cell body links to each other with the scavenging pump, the scavenging pump with spray the cavity and link to each other.

### BRIEF SUMMARY

The cleaning devices of Patent Literature 1 that are laterally arranged may have a difficulty in maintaining a drive unit and a pump.

An object of the present invention is to provide a processing system which is easy to maintain when laterally arranged.

The present invention provides a processing system, including:
a plurality of processing units, each of the processing units includes,
   a processing chamber located forward, the processing chamber including
      a loading door located at a front surface for loading or unloading a workpiece, and
      a first inspection door located at a rear surface;
   a control panel arranged separately and rearward from the processing chamber; and
   a step arranged between the processing chamber and the control panel;
wherein
the steps of the plurality of the processing units have the same height, and
the processing chambers of the plurality of the processing units are laterally arranged to have front surfaces of the processing chambers aligned for connecting each of the steps to form a passage.

The processing units are, for example, a jet cleaning device, a blower, a vacuum dryer, and a deburring machine. The deburring machine includes a device for deburring by bringing a rotation tool or a brush into contact with a workpiece, and a device for deburring by the dynamic pressure of liquid jet by ejecting the liquid jet to the workpiece.

For example, a cleaning liquid ejection nozzle, a blow nozzle, a vacuum drying container, or a deburring tool are disposed in the processing chamber. The cleaning liquid ejection nozzle, the blow nozzle, the vacuum drying container and the deburring tool can be moved relative to the workpiece. For example, the cleaning liquid ejection nozzle, the blow nozzle, the vacuum drying container, and the deburring tool are numerically controlled. The workpiece is loaded into the processing chamber. The workpiece is cleaned, blown, dried, and deburred inside the processing chamber.

A robot, a rotating device, or a turning device may be disposed inside the processing chamber. The robot, the rotating device, and the turning device move the cleaning liquid ejection nozzle, the blow nozzle, and the deburring tool relative to the table, respectively. The robot, the rotating device, and the turning device are driven by a motor. For example, the robot, the rotating device, and the turning device are numerically controlled.

The robot is, for example, a vertical articulated robot, a horizontal articulated robot, or a parallel link robot. The rotating device is, for example, a cleaning table for mounting a workpiece, or a table rotating device for rotating the turning table. The turning device is, for example, a table turning device for turning the table about a pivot axis perpendicular to the rotation axis.

Preferably, when the front surfaces of a plurality of processing units are laterally arranged, the rear surfaces of each processing unit are aligned with each other. At this time, each rear surface of the processing chambers are substantially flush with each other. The rear surface may have protrusions and recesses.

Preferably, the processing chamber includes a base top connected to the frontmost surface and a front surface connected to the base top and rising from the rear of the base top. The processing chamber has a loading port having a front opening located at the lower part of the front surface, and a semicircular top opening located behind the base top and connected to the front opening.

The loading door is a cylindrical slide door having a cylindrical surface and an upper surface connected to the cylindrical surface. When the loading door is opened, the loading door passes through the loading port to be housed in the processing chamber. When the loading door is opened, the loading port is exposed upward and forward.

Preferably, the loading door is a double door. For example, the left loading door has a cylindrical surface having a central angle of about 90 degrees, and a top surface, which has a fan shape, having a central angle of about 90 degrees. The left loading door rotates along the cylindrical surface to be housed in the left half of the processing chamber. The right loading door is plane-symmetrical with the left loading door. The right loading door rotates along the cylindrical surface to be housed in the right half of the processing chamber.

The processing unit includes, for example, a cleaning pump, an air filter unit, a cleaning liquid filtration device, a vacuum pump, and an air source. The air source may be, for example, a blower, an air compressor, an air filter, or an air dryer. The cleaning pump, the air filter unit, the cleaning liquid filtration device, the vacuum pump, the blower and the air source are arranged inside the machine room.

A tank may be arranged below the step. The tank stores a cleaning liquid or a coolant. The step may be integral with the tank. For example, the top surface of the tank is open, and the lid placed on the top surface of the tank may form the step.

Preferably, the control panel is arranged at the back of the machine room. The control panel may have a door on the rear surface. Preferably, when the plurality of processing units are laterally arranged, the rear surfaces of the control panels are aligned. In other words, the back surfaces of each control panel are arranged on the same plane. Preferably, the machine room includes a second inspection door located at a front surface, the machine room arranged frontward from and in contact with the control panel.

Preferably, the control panel and the processing chamber are integrally formed. For example, a frame or a tank is arranged below the step. The control panel, the machine room and the processing chamber are integrally connected by the frame or the tank.

The cable rack may be arranged below the step. The cable rack houses power cables for supplying power from the control panel to the robot, the table turning device, and the nozzle rotation device in the processing chamber, and control cables for sensors arranged in the processing chamber. Further, the cable rack may house the cleaning pipe, the air pipe, or the vacuum pipe.

Preferably, the process chamber, the step, and the control panel have the same width. Preferably, the machine room has the same width as the processing chamber. Preferably, each of the left and right side surfaces of the processing unit is a single plane.

When a plurality of the processing units are laterally arranged, the steps of each processing unit are connected. The plurality of the processing units may be arranged in contact with each other. When the plurality of the processing units are arranged in contact with each other, the steps are continuous. The connected steps function as a passage. Since each step is continuous at the same height, there is no difference in height over the step, and the operator can easily walk over the step. Preferably, a step is arranged between the processing chamber and the machine room.

The connecting frame is, for example, a frame of an automatic conveyor. The reference plane is located at a predetermined position from the table or the table rotation axis. When each processing unit is connected to the connecting frame, the processing units are precisely aligned.

The adjacent processing units may be disposed with a gap therebetween. Preferably, additional steps are provided between each processing unit.

The adjacent processing units may also be substantially equally spaced. Here, substantially the equal space is such a width that the operator cannot pass between adjacent processing units.

The processing system of the present invention is easy to maintain when laterally arranged.

### BRIEF DESCRIPTION OF DRAWINGS

FIG. 1 is a perspective view of a processing system of an embodiment that is laterally arranged.
FIG. 2 is a perspective view of a jet cleaning device of the embodiment.
FIG. 3 is a perspective view of the jet cleaning device of the embodiment.
FIG. 4 is a perspective view of a blower of the embodiment.
FIG. 5 is a perspective view of a vacuum dryer of the embodiment with some part cut away.
FIG. 6 is a perspective view of a deburring machine of the embodiment with some part cut away.

### DETAILED DESCRIPTION

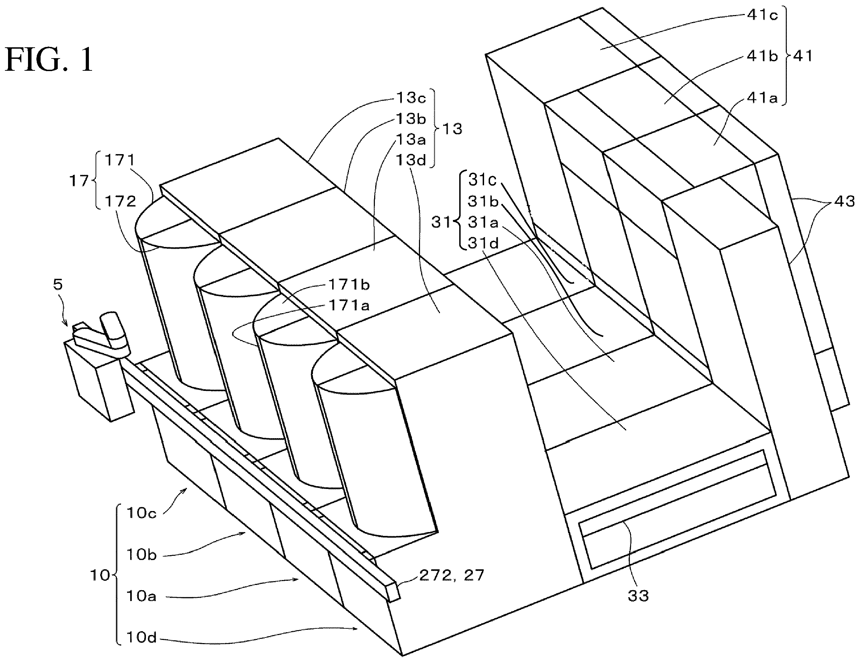

As shown in FIG. 1, a processing system 10 according to an embodiment includes a plurality of processing units 10a to 10d. The plurality of processing units 10a to 10d are laterally arranged with their side surfaces closely adjacent to each other. The processing units 10a to 10d of the present embodiment are, for example, a jet cleaning device 10a, a blower 10b, a vacuum dryer 10c, or a deburring machine 10d. The jet cleaning device 10a, the blower 10b, the vacuum dryer 10c, and the deburring machine 10d each has a substantially the same overall configuration. The processing units 10a to 10d each includes a processing chamber 13, a step 31, a power cable 34, and a control panel 43. The processing units 10a to 10d each may include a connecting member 27, a machine room 41, and a cable rack 33.

The processing chamber 13 and the control panel 43 in each of the processing units 10a to 10d have substantially the same width. The processing chamber 13 and the step 31 in each of the processing units 10a to 10d have substantially the same width. The processing chamber 13 and the machine room 41 in each of the processing units 10a to 10d have substantially the same width.

Adjacent processing units 10a to 10d may be arranged with substantially the same gap. Here, substantially the same gap is such a width that an operator cannot pass between adjacent processing units 10a to 10d. This prevents the operator from entering from the rear of the processing units 10a to 10d.

The processing units 10a to 10d each has the step 31 having the same height. The processing units 10a to 10d each has the step 31 having the same length in the front-rear direction. The processing units 10a to 10d each has the processing chamber 13 having the same length in the front-rear direction.

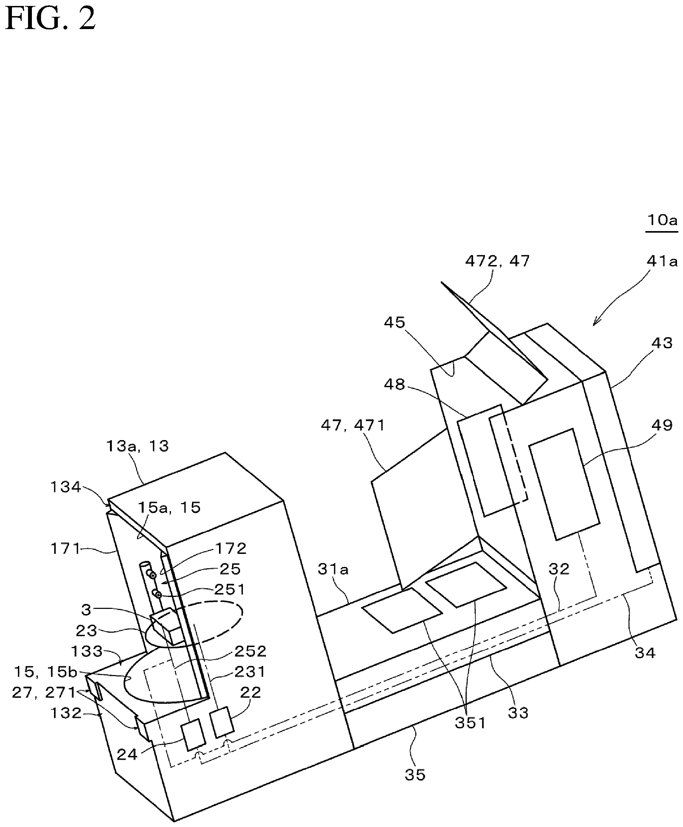

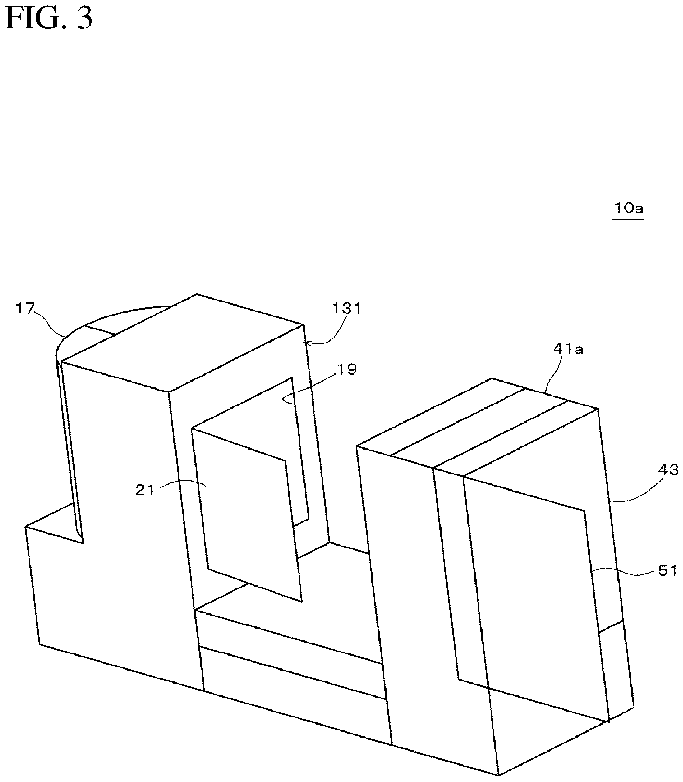

The jet cleaning device 10a will be described below. As shown in FIGs. 2 and 3, the jet cleaning device 10a includes a cleaning chamber 13a, a machine room 41a, a tank 35, a cleaning pipe 32, a table 23, a nozzle 25, and a pump 49. The jet cleaning device 10a may include a filter 48.

The cleaning chamber 13a, the machine room 41a, the tank 35, and the control panel 43 of the jet cleaning device 10a each has a left surface and a right surface located on the same plane, respectively. Viewed from above, the jet cleaning device 10a has a rectangular shape.

FIGs. 2 and 3 show a loading door 17, an inspection door 21, and an inspection door 47 each of which is opened. As shown in FIGs. 1 to 3, the cleaning chamber 13a has a back surface 131, a first front surface 132, a base top 133, a second front surface 134, a loading port 15, and the loading door 17. The cleaning chamber 13a may include a rear opening 19, the inspection door 21, a table rotation motor 22, a nozzle pivot motor 24, and the connecting member 27.

The cleaning chamber 13a is L-shaped in a side view. The first front surface 132 is a surface protruding to the most frontward below the cleaning chamber 13a. The base top 133 is connected to an upper end of the first front surface 132 and extends horizontally rearward from the first front surface 132. The second front surface 134 is connected to the rear end of the base top 133 and extends upward from the base top 133. The back surface 131 extends from the upper end to the lower end of the cleaning chamber 13a.

The loading port 15 has a front opening 15a and a top opening 15b. The front opening 15a has a rectangular shape. The front opening 15a occupies substantially the entire plane of the second front surface 134. The front opening 15a is located at a lower portion in the center of the width of the second front surface 134. The top opening 15b, which has a semicircular shape, is connected to the front opening 15a. The top opening 15b is located at the rear side of the base top 133.

The loading door 17 is, for example, a slide door. The loading door 17 is disposed in the loading port 15. The loading door 17 includes a left loading door 171 and a right loading door 172. The left loading door 171 has a shape obtained by cutting a drum to have a central angle of 90 degrees. The left loading door 171 has a cylindrical surface 171a and a top surface 171b. The cylindrical surface 171a has a quarter cylindrical shape. The top surface 171b, which is a quarter disk, is connected to the cylindrical surface 171a. The right loading door 172 is plane symmetrical with the left loading door 171. The right loading door 172 has a cylindrical surface 172a and a top surface 172b.

The left loading door 171 and the right loading door 172 are disposed inside the loading port 15. The left loading door 171 and the right loading door 172 are closed to form a semi-cylindrical shape, thus to close the top opening 15b and the front opening 15a of the loading port 15.

The left loading door 171 pivots to the left by about 90 degrees along the cylindrical surface 171a when viewed from the front surface 132. The right loading door 172 pivots to the right by about 90 degrees along the cylindrical surface 172a when viewed from the front surface 132.

When the loading door 17 is opened, the loading port 15 is almost completely opened. At this time, the left loading door 171 is accommodated in the left half of the cleaning chamber 13a. The right loading door 172 is accommodated in the right half of the cleaning chamber 13a.

The connecting member 27 has a reference plane 271 and a connecting frame 272. The connecting frame 272 is a frame serving as a reference, and is a frame of an automatic conveyer 5, for example. The reference plane 271 is located on the front surface 132, for example. The reference plane 271 is located at a predetermined position from the table 23. The connecting frame 272 and the respective reference plane 271 are positioned, for example, with pins. The connecting frame 272 is connected to each of the reference plane 271 of the processing units 10a to 10d. This arranges each of the processing units 10a to 10d at an accurate position.

The connecting member 27 may include a reference plane (reference portion) 271 and a coupling member (not shown). At this time, the reference plane 271 is disposed, for example, on only one side of the front surfaces 132, e.g., on the left side. The coupling member is disposed, for example, on the right side of the front surface 132. The coupling member protrudes from the right side surface. The coupling member is coupled to each of the reference plane 271 of the processing units 10a to 10d. The reference plane 271 and the coupling member are positioned, for example, with pins. This arranges the processing units 10a to 10d at an accurate position.

The reference plane 271 may be located on either of the left and right side surfaces. The coupling member (not shown) is disposed on the opposite side of the reference plane 271. The coupling member is coupled to the reference plane 271 of adjacent processing units 10a to 10d.

As shown in FIG. 3, the back surface 131 has a rear opening 19. The rear opening 19 is located above the step 31. The rear opening 19 has, for example, a rectangular shape. The inspection door 21 is disposed on the rear opening 19. For example, the inspection door 21 is a single swing door. The inspection door 21 is, for example, a right hand door (right hand outswing door).

The table 23 is disposed inside the cleaning chamber 13a. The entire table 23 may be positioned forward of the front surface 134 when viewed from the top. Alternatively, only a part of the table 23 may be positioned forward of the front surface 134 when viewed from the top. Thus, when the loading door 17 is opened, as viewed from above and front, the table 23 is exposed from the loading port 15. The table 23 is, for example, a rotary table. A workpiece 3 is placed on the table 23. The table 23 is connected to the table rotation motor 22. The table 23 rotates about the table rotation axis 231. The table rotation axis 231 extends vertically.

The nozzle 25 is disposed inside the cleaning chamber 13a. The nozzle 25 extends, for example, in the vertical direction. For example, the nozzle 25 horizontally ejects the cleaning liquid toward the workpiece 3. For example, the nozzle 25 has a plurality of outlets 251. The nozzle 25 is rotated about a nozzle rotation axis 252 by a nozzle pivot motor 24. The nozzle rotation axis 252 extends vertically.

The step 31a has a height of, for example, about 200 mm to 400 mm. The operator walks on the step 31a.

The tank 35 stores the cleaning liquid. The tank 35, which is, for example, a box-shaped, is an open double tank. The tank 35 includes a lid 351. The lid 351 and the upper surface of the tank 35 forms the upper surface of the step 31a.

The machine room 41a has a front opening 45 and the inspection door 47. The inspection door 47 includes a single swing door 471 and a swing up door 472.

As shown in FIGs. 1 and 2, the front opening 45 extends vertically from the upper portion of the step 31 at the front surface of the machine room 41a toward the front side half of the upper surface of the machine room 41a. Preferably, the front opening 45 extends substantially the entire width of the machine room 41a.

The single swing door 471 covers from the center portion to the lower end of the front opening 45. The single swing door 471 is, for example, a left hand door (left hand outswing door). The swing up door 472 covers the upper portion and the upper surface portion of the front opening 45.

The control panel 43 is disposed on the back of the machine room 41a. The control panel 43 includes a door 51 on the back. The door 51 is, for example, a single swing door or a double door. The control panel 43 houses a power supply, a numerical control device, an amplifier, a relay or the like.

The pump 49 is disposed inside the machine room 41a. The pump 49 is, for example, a liquid pump, a centrifugal pump or a piston pump. The pump 49 pressurizes the cleaning liquid stored in the tank 35 to supply it to the nozzle 25.

The filter 48 is disposed inside the machine room 41a. The filter 48 filters the cleaning liquid in the tank 35.

The cable rack 33 is disposed below the step 31. The cable rack 33 houses the power cable 34 and the cleaning pipe 32. The power cable 34 connects the control panel 43 and the motors 22, 24. The power cable 34 supplies a drive current to the motors 22, 24. The cleaning pipe 32 connects the pump 49 to the nozzle 25. The cleaning pipe 32 supplies the cleaning liquid from the pump 49 to the nozzle 25.

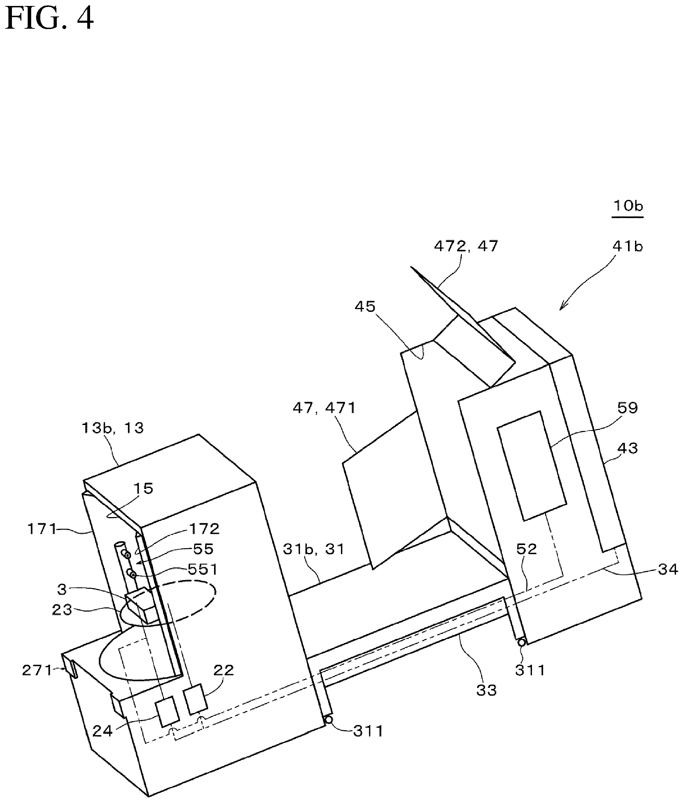

FIG. 4 shows the blower 10b with the loading door 17 and the inspection door 47 opened. As shown in FIG. 4, the blower 10b includes a blow chamber 13b, a step 31b, an air source 59, an air pipe 52, and an air nozzle 55. The blower 10b may have a machine room 41b. The other configuration of the blower 10b is the same as that of the jet cleaning device 10a. The blow chamber 13b, the machine room 41b, the step 31b, and the control panel 43 of the blower 10b each has a left surface and a right surface located on the same plane, respectively. Viewed from above, the blower 10b has a rectangular shape.

The blow chamber 13b has the same structure as the cleaning chamber 13a. The air nozzle 55 has an outlet 551. The outlet 551 is, for example, a pipe or a slit.

The step 31b includes a caster 311. The step 31b has the same height as the step 31a. The step 31b is separated from the blow chamber 13b and the machine room 41b. The step 31b is laterally slidable. This allows the region behind the blow chamber 13b to be opened.

The machine room 41b has the same structure as the machine room 41a. The air source 59 is disposed, for example, inside the machine room 41b. The air source 59 is, for example, an air filter, a blower, an air compressor, or an air dryer. Power of the air source 59 is supplied from the control panel 43.

When the air source 59 is unnecessary, the machine room 41b may be omitted. In this case, for example, compressed air is directly supplied to the blow chamber 13b.

The air pipe 52 is disposed in the cable rack 33. The air pipe 52 connects the air source 59 to the air nozzle 55. The air pipe 52 supplies dry air or compressed air to the air nozzle 55.

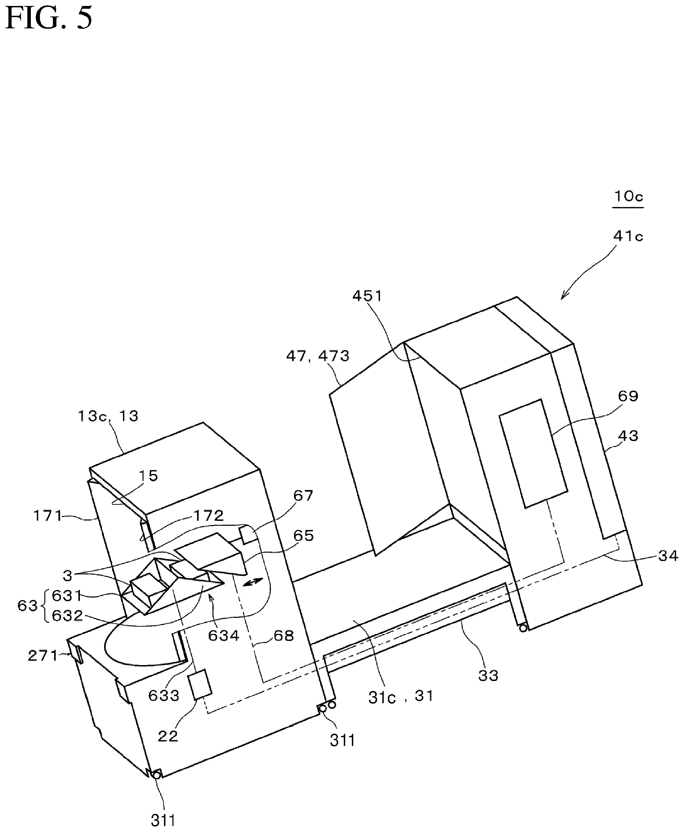

FIG. 5 shows a vacuum dryer 10c with the loading door 17 and the inspection door 47 opened. The vacuum dryer 10c includes a drying chamber 13c, a step 31c, a machine room 41c, a turning table 63, a container lid 65, a cylinder 67, a vacuum pump 69, and a vacuum pipe 68. The other configuration of the vacuum dryer 10c is the same as that of the jet cleaning device 10a. The drying chamber 13c, the machine room 41c, the step 31c, and the control panel 43 of the vacuum dryer 10c each has a left surface and a right surface located on the same plane, respectively. Viewed from above, the vacuum dryer 10c has a rectangular shape.

The drying chamber 13c has the same structure as the cleaning chamber 13a. However, the drying chamber 13c has a caster 311. The turning table 63, the container lid 65, and the cylinder 67 are disposed inside the drying chamber 13c.

The turning table 63 is divided by 180 degrees, and includes a first vacuum container 631 and a second vacuum container 632. The first vacuum container 631 and the second vacuum container 632 have the same structure, and are arranged rotationally symmetrically about a pivot axis 633. The first vacuum container 631 has a triangular shape when viewed from the side and a square shape when viewed from above. The first vacuum container 631 is a box-shaped container that is open in an obliquely upward direction on the side remote from the pivot axis 633. The workpiece 3 is installed in each of the first vacuum container 631 and the second vacuum container 632.

The table rotation motor 22 rotates the turning table 63 by 180 degrees to arrange one of the first vacuum container 631 and the second vacuum container 632 at a drying position 634.

The cylinder 67 is, for example, an air cylinder, or an electric cylinder.

The container lid 65 has a triangular shape when viewed from the side and a square shape when viewed from above. The container lid 65 is a box-shaped lid which is opened obliquely downward toward the pivot axis 633. The container lid 65 is connected to the cylinder 67. The cylinder 67 moves the container lid 65 in the front-rear direction. When moved forward, the container lid 65 is connected to the first vacuum container 631 or the second vacuum container 632 located at the drying position 634. Then, the container lid 65 seals the first vacuum container 631 or the second vacuum container 632.

The step 31c has the same structure as the step 31b. When the rear space of the drying chamber 13c is opened by sliding the step 31c laterally, the drying chamber 13c can be slid into the rearward open space.

The machine room 41c has a front opening 451 and an inspection door 473. The front opening 451 extends substantially over the entire front surface of the machine room 41c. The inspection door 473 is, for example, a single swing right hand door.

The vacuum pump 69 is disposed inside the machine room 41c. The vacuum pump 69 is, for example, a roots pump, a scroll pump, or a rotary pump.

The vacuum pipe 68 connects the vacuum pump 69 to the container lid 65. The vacuum pump 69 depressurizes the sealed inside of the first vacuum container 631 or the second vacuum container 632 to dry the workpiece 3.

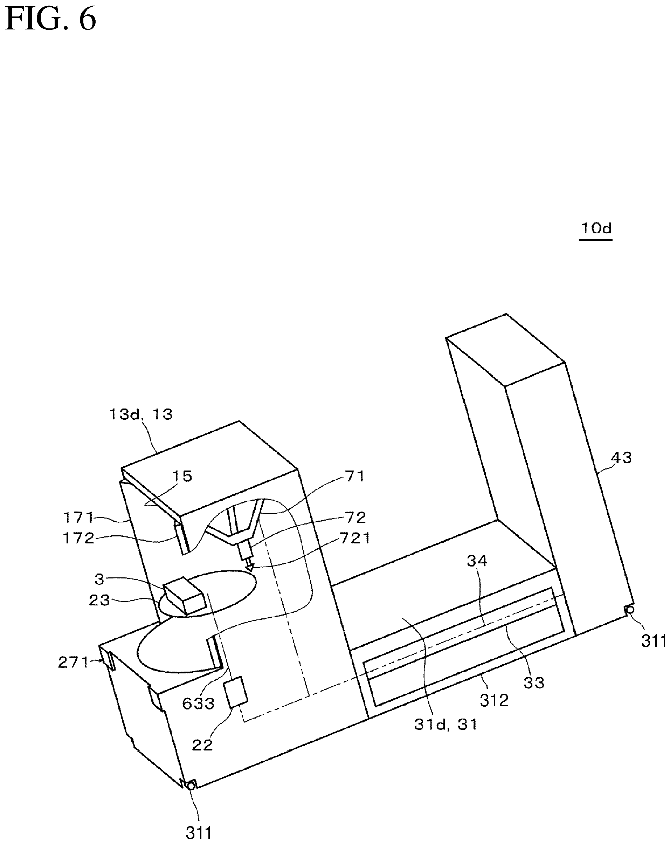

As shown in FIG. 6, a deburring machine 10d includes a deburring chamber 13d, a table rotation motor 22, a table 23, a robot 71, a deburring tool 72, a step 31d, the control panel 43, and a cable rack 33. The deburring chamber 13d, the step 31d, and the control panel 43 of the deburring machine 10d each has a left surface and a right surface located on the same plane, respectively. Viewed from above, the deburring machine 10d has a rectangular shape. The deburring machine 10d includes a caster 311.

The deburring chamber 13d has the same structure as the cleaning chamber 13a. The robot 71 is, for example, a parallel link type robot, and is disposed inside the deburring chamber 13d. The deburring tool 72 includes, for example, a rotary cutting tool 721. The deburring tool 72 is installed in the flange portion of the robot 71. The robot 71 freely controls the position and posture of the deburring tool 72. The robot 71 moves the rotary cutting tool 721 against the workpiece 3 to perform deburring process.

The step 31d includes a frame 312. The step 31d has the same height and length as the steps 31a, 31b, 31c. The frame 312 connects the deburring chamber 13d to the control panel 43.

The step 31d may have a longer length than the steps 31a to 31c to have the same distance from the first front surface 132 to the rear surface of the control panel 43 in the processing units 10a to 10c. In this case, when arranging the processing units 10a to 10d, the rear surface position of each control panel 43 is aligned.

As shown in FIG. 1, when the jet cleaning device 10a, the blower 10b, the vacuum dryer 10c, and the deburring machine 10d are laterally arranged, the steps 31 are connected to each other. When the jet cleaning device 10a, the blower 10b, the vacuum dryer 10c, and the deburring machine 10d are arranged in close contact, the steps 31 form a passage by itself. This allows the operator to walk on the step 31 to move between the processing units 10a to 10d.

Each inspection door 21, 471, 472, 473 faces the step 31. Thus, the operator who rides on the step 31 can perform maintenance operation inside the cleaning chamber 13a, the blow chamber 13b, the drying chamber 13c, the deburring chamber 13d, and the machine rooms 41a, 41b, 41c.

Thus, even if the processing units 10a to 10d are closely arranged, it is easy to perform maintenance operation.

Further, when the processing units 10a to 10d are laterally arranged, the control panels 43 are arranged on the back of the processing units 10a to 10d. The operator can open each of the control panel 43 from the rear of the processing units 10a to 10d to perform maintenance operation. As the control panels 43 are regularly arranged, workability is improved.

As the processing units 10a to 10d each has the same external dimensions, the arrangement can be freely changed. For example, one deburring machine 10d, two jet cleaning devices 10a, and one vacuum dryer 10c are arranged side by side in order. Thereafter, the space between the jet cleaning device 10a and the vacuum dryer 10c is separated by one processing unit for the blower 10b to be inserted into the space. Alternatively, the jet cleaning device 10a or the blower 10b may be pulled out to close the space therebetween.

The step 31b of the blower 10b and the vacuum dryer 10c may be slid laterally to open the rear space of one processing chamber. Sliding the vacuum dryer 10c rearward allows maintenance operation from the front and the rear.

The cleaning chamber 13a and the blow chamber 13b may include the casters 311. The tank 35 may include the casters 311. The cleaning chamber 13a, the tank 35, the machine room 41a, and the control panel 43 of the jet cleaning device 10a may be integrally arranged to have the casters 311.

While the foregoing embodiments illustrate preferred examples, those skilled in the art will appreciate that various alternatives, modifications, variations, or improvements may be made in light of the teachings disclosed herein and are within the scope of the appended claims.

### Reference Signs List

- 10a: Jet cleaning device
- 10b: Blower
- 10c: Vacuum dryer
- 10d: Deburring machine
- 13a: Cleaning chamber
- 13b: Blow chamber
- 13c: Drying chamber
- 13d: Deburring chamber
- 17: Loading door
- 31: Step
- 41: Machine room
- 43: Control panel

## Claims

1. A processing system (10), comprising:
a plurality of processing units (10a - 10d), each of the processing units (10a - 10d) includes,
a processing chamber (13) located frontward, the processing chamber (13) including
a loading door (17) located at a front surface for loading or unloading a workpiece (3), and
a first inspection door (21) located at a rear surface;
a control panel (43) arranged separately and rearward from the processing chamber (13); and
a step (31) arranged between the processing chamber (13) and the control panel (43);
wherein
the steps (31) of the plurality of the processing units (10a - 10d) have the same height, and
the processing chambers (13) of the processing units (10a - 10d) are laterally arranged to have front surfaces of the processing chambers (13) aligned for connecting each of the steps (31) to form a passage.

2. The processing system (10) according to claim 1, wherein
the control panel (43) has substantially the same width as the processing chamber (13), and
the step (31) has substantially the same width as the processing chamber (13).

3. The processing system (10) according to claim 1 or 2, wherein the processing units (10a - 10d) each includes
a machine room (41) including a second inspection door (47) located at a front surface, the machine room (41) arranged frontward from and in contact with the control panel (43).

4. The processing system (10) according to claim 3, wherein
the step (31) is arranged between the processing chamber (13) and the machine room (41)

5. The processing system (10) according to any one of claims 1 to 4, wherein each of the processing units (10a - 10d) includes
a cable rack (33) arranged below the step (31), the cable rack (33) connecting the processing chamber (13) and the machine room (41).

6. The processing system (10) according to any one of claims 1 to 5, wherein
the processing chambers (13) of the plurality of the processing units (10a - 10d) have the same length in a front-rear direction.

7. The processing system (10) according to any one of claims 1 to 6, wherein
the steps (31) of the plurality of the processing units (10a - 10d) have the same length in a front-rear direction.

8. The processing system (10) according to any one of claims 1 to 7, wherein
the processing chamber (13) and the step (31) each includes a caster (311),
the step (31) is laterally slidable from between the processing chamber (13) and the machine room (41), and
the processing chamber (13) is slidable to a rearward space after the step (31) is slid away.

9. The processing system (10) according to any one of claims 1 to 8, wherein each of the processing units (10a - 10d) includes
a tank (35) arranged below the step (31) to store a cleaning liquid.

10. The processing system (10) according to any one of claims 1 to 9,
wherein each of the processing chamber (13) in the plurality of the processing units (10a - 10d) have a reference plane (271) located at a front surface, and
the processing system (10) further comprising:
a connecting frame (272) connected to each of the reference plane (271) in the plurality of the processing units (10a - 10d).

11. The processing system (10) according to any one of claims 1 to 9, wherein each of the processing units (10a - 10d) includes,
a connecting reference portion (271) located at a front surface of the processing chamber (13), and
a coupling member configured to be coupled to the connecting reference portion (271) of the adjacent processing unit (10a - 10d).

## Patentansprüche

1. Verarbeitungssystem (10), das aufweist:
mehrere Verarbeitungseinheiten (10a - 10d), wobei jede der Verarbeitungseinheiten (10a - 10d) aufweist,
eine Verarbeitungskammer (13), die vorne angeordnet ist,
wobei die Verarbeitungskammer (13) aufweist:
eine Ladetür (17), die sich an einer vorderen Fläche zum Laden oder Entladen eines Werkstücks (3) befindet, und
eine erste Inspektionstür (21), die sich an einer hinteren Fläche befindet;
ein Bedienfeld (43), das separat und hinter der Verarbeitungskammer (13) angeordnet ist; und
eine Stufe (31), die zwischen der Verarbeitungskammer (13) und dem Bedienfeld (43) angeordnet ist;
wobei
die Stufen (31) der mehreren Verarbeitungseinheiten (10a - 10d) dieselbe Höhe aufweisen, und
die Verarbeitungskammern (13) der Verarbeitungseinheiten (10a - 10d) lateral so angeordnet sind, dass die vorderen Flächen der Verarbeitungskammern (13) zur Verbindung jeder der Stufen (31) zur Bildung eines Durchgangs ausgerichtet sind.

2. Verarbeitungssystem (10) nach Anspruch 1, wobei
das Bedienfeld (43) im Wesentlichen dieselbe Breite wie die Verarbeitungskammer (13) aufweist, und
die Stufe (31) im Wesentlichen dieselbe Breite wie die Verarbeitungskammer (13) aufweist.

3. Verarbeitungssystem (10) nach Anspruch 1 oder 2, wobei die Verarbeitungseinheiten (10a - 10d) jeweils aufweisen:
einen Maschinenraum (41), der eine zweite Inspektionstür (47) aufweist, die sich an einer vorderen Fläche befindet, wobei der Maschinenraum (41) vor und in Kontakt mit dem Bedienfeld (43) angeordnet ist.

4. Verarbeitungssystem (10) nach Anspruch 3, wobei
die Stufe (31) zwischen der Verarbeitungskammer (13) und dem Maschinenraum (41) angeordnet ist.

5. Verarbeitungssystem (10) nach einem der Ansprüche 1 bis 4, wobei jede der Verarbeitungseinheiten (10a - 10d) aufweist:
eine unter der Stufe (31) angeordnete Kabelpritsche (33),
wobei die Kabelpritsche (33) die Verarbeitungskammer (13) und den Maschinenraum (41) verbindet.

6. Verarbeitungssystem (10) nach einem der Ansprüche 1 bis 5, wobei
die Verarbeitungskammern (13) der mehreren Verarbeitungseinheiten (10a - 10d) dieselbe Länge in einer Richtung von vorne nach hinten aufweisen.

7. Verarbeitungssystem (10) nach einem der Ansprüche 1 bis 6, wobei
die Stufen (31) der mehreren Verarbeitungseinheiten (10a - 10d) in einer Richtung von vorne nach hinten dieselbe Länge aufweisen.

8. Verarbeitungssystem (10) nach einem der Ansprüche 1 bis 7, wobei
die Verarbeitungskammer (13) und die Stufe (31) jeweils eine Laufrolle (311) aufweisen,
die Stufe (31) lateral zwischen der Verarbeitungskammer (13) und dem Maschinenraum (41) verschiebbar ist, und
die Verarbeitungskammer (13) zu einem hinteren Raum verschiebbar ist, nachdem die Stufe (31) weggeschoben ist.

9. Verarbeitungssystem (10) nach einem der Ansprüche 1 bis 8, wobei jede der Verarbeitungseinheiten (10a - 10d) aufweist:
einen unter der Stufe (31) angeordneten Tank (35) zum Speichern einer Reinigungsflüssigkeit.

10. Verarbeitungssystem (10) nach einem der Ansprüche 1 bis 9, wobei jede der Verarbeitungskammern (13) in den mehreren Verarbeitungseinheiten (10a - 10d) eine Bezugsebene (271) aufweist, die sich an einer vorderen Fläche befindet, und das Verarbeitungssystem (10) ferner aufweist:
einen Verbindungsrahmen (272), der mit jeder der Bezugsebenen (271) in den mehreren Verarbeitungseinheiten (10a - 10d) verbunden ist.

11. Verarbeitungssystem (10) nach einem der Ansprüche 1 bis 9, wobei jede der Verarbeitungseinheiten (10a - 10d) aufweist, einen Verbindungsbezugsabschnitt (271), der an einer vorderen Fläche der Verarbeitungskammer (13) angeordnet ist, und
ein Kopplungselement, das konfiguriert ist, mit dem Verbindungsbezugsabschnitt (271) der benachbarten Verarbeitungseinheit (10a - 10d) gekoppelt zu werden.

## Revendications

1. Système de traitement (10), comprenant :
une pluralité d'unités de traitement (10a - 10d), chacune des unités de traitement (10a -10d) comprenant :
une chambre de traitement (13) située sur l'avant, ladite chambre de traitement (13) présentant
une porte de chargement (17) située sur une surface avant pour le chargement ou le déchargement d'une pièce (3), et
une première porte d'inspection (21) située sur une surface arrière ;
un panneau de commande (43) disposé séparément et à l'arrière de la chambre de traitement (13) ; et
un gradin (31) disposé entre la chambre de traitement (13) et le panneau de commande (43) ;
où
les gradins (31) de la pluralité d'unités de traitement (10a - 10d) ont la même hauteur, et
les chambres de traitement (13) des unités de traitement (10a - 10d) sont disposées latéralement de telle manière que les surfaces avant des chambres de traitement (13) sont alignées pour raccorder chacun des gradins (31) afin de former un passage.

2. Système de traitement (10) selon la revendication 1, où le panneau de commande (43) a sensiblement la même largeur que la chambre de traitement (13), et
le gradin (31) a sensiblement la même largeur que la chambre de traitement (13).

3. Système de traitement (10) selon la revendication 1 ou la revendication 2, où les unités de traitement (10a - 10d) comprennent chacune
un compartiment machine (41) présentant une deuxième porte d'inspection (47) située sur une surface avant, ledit compartiment machine (41) étant disposé à l'avant du panneau de commande (43) et en contact avec celui-ci.

4. Système de traitement (10) selon la revendication 3, où le gradin (31) est disposé entre la chambre de traitement (13) et le compartiment machine (41).

5. Système de traitement (10) selon l'une des revendications 1 à 4, où chacune des unités de traitement (10a - 10d) présente
un chemin de câbles (33) disposé en dessous du gradin (31), ledit chemin de câbles (33) raccordant la chambre de traitement (13) au compartiment machine (41).

6. Système de traitement (10) selon l'une des revendications 1 à 5, où
les chambres de traitement (13) de la pluralité d'unités de traitement (10a - 10d) ont la même longueur dans la direction avant-arrière.

7. Système de traitement (10) selon l'une des revendications 1 à 6, où
les gradins (31) de la pluralité d'unités de traitement (10a - 10d) ont la même longueur dans la direction avant-arrière.

8. Système de traitement (10) selon l'une des revendications 1 à 7, où
la chambre de traitement (13) et le gradin (31) comprennent chacun une roulette (311),
le gradin (31) peut coulisser latéralement entre la chambre de traitement (13) et le compartiment machine (41), et
la chambre de traitement (13) peut coulisser vers un espace arrière après coulissement du gradin (31).

9. Système de traitement (10) selon l'une des revendications 1 à 8, où chacune des unités de traitement (10a - 10d) comprend
un réservoir (35) disposé en dessous du gradin (31) pour stocker un liquide de nettoyage.

10. Système de traitement (10) selon l'une des revendications 1 à 9, où chaque chambre de traitement (13) de la pluralité d'unités de traitement (10a - 10d) a un plan de référence (271) situé sur une surface avant, et où
ledit système de traitement (10) comprend en outre :
un cadre de connexion (272) raccordé à chacun des plans de référence (271) dans la pluralité d'unités de traitement (10a - 10d).

11. Système de traitement (10) selon l'une des revendications 1 à 9, où chacune des unités de traitement (10a - 10d) comprend :
une partie de référence de connexion (271) située sur une surface avant de la chambre de traitement (13), et
un élément d'accouplement prévu pour être accouplé à la partie de référence de connexion (271) de l'unité de traitement (10a - 10d) adjacente.
